Europäisches Patentamt

European Patent Office

Office européen des brevets

(11) Publication number: **0 073 070**
**B1**

## EUROPEAN PATENT SPECIFICATION

(45) Date of publication of patent specification: **27.12.85**

(51) Int. Cl.⁴: **F 16 L 27/12**

(21) Application number: **82200371.1**

(22) Date of filing: **24.03.82**

(54) **Telescopic cylinder construction.**

(30) Priority: **20.08.81 US 294818**

(43) Date of publication of application:
**02.03.83 Bulletin 83/09**

(45) Publication of the grant of the patent:
**27.12.85 Bulletin 85/52**

(84) Designated Contracting States:
**BE DE FR GB IT NL SE**

(56) References cited:
**BE-A- 665 489**
**FR-A- 601 527**
**US-A-3 466 062**
**US-A-3 605 563**
**US-A-3 934 423**

(73) Proprietor: **Hydraulic Technology Corporation**
**246 SpringLine Drive**
**Naples Florida 33940 (US)**

(72) Inventor: **Sheriff, Merle Miller**
**7316 San Benito**
**Carlsbad, Cal. 97008 (US)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

## Description

The invention relates to a telescopic fluid pressure cylinder comprising an open ended hollow cylindrical base member with closed end wall at one end and provided with means for supporting the cylinder as well as with a fluid pressure passageway with means for connecting it to a fluid pressure source and further comprising a plurality of concentrically arranged cylindrical sleeves, each guided and sealed inside the other with the outermost guided and sealed inside the cylindrical base member and the innermost sleeve being closed at the end opposite the closed base of the base member and provided with means for connecting it to a device to be moved, said base member as well as all sleeves between base member and innermost sleeve having near their open ends sealing rings, bearing rings and a stop, whilst all sleeves at their opposite ends have an outwardly open groove with a bearing ring in engagement with the inner cylindrical surface of base member and the inner sleeves respectively.

A telescopic fluid pressure cylinder is known from US—A—3 934 423. This known telescopic pressure cylinder has grooves for the sealing rings and bearing rings in separate parts which by means of welding and permanently attached to the main portion of the cylindrical base member and the respective cylindrical sleeves. The use of composite annular members shaped to provide grooves for sealing and bearing rings and attached to a standard wall tube considerably increase the cost of manufacturing.

Purpose of the invention is to provide a telescopic fluid pressure cylinder which is more economic to manufacture.

According to the invention this purpose is achieved in that at least the sleeves are thin wall cylindrical tubes having near their open ends machined grooves in their interior surfaces for the removable mounting of the sealing ring, bearing ring and a stop ring whilst near their opposite ends the sleeves have machined grooves in the outer surfaces for the removable mounting of the bearing rings, the sleeves between base member and innermost sleeve also each have in their inner surfaces a machined groove for a lifting ring located adjacent to the respective inner bearing ring between said bearing ring and the closed end wall of the base member and arranged for abutment with said respective bearing ring.

Preferably also the base member is made of the same thin wall cylindrical tubing.

According to the invention no composite parts with grooves for sealing and bearing rings and the like have to be manufactured and attached by welding or by other means because all grooves are machined directly at the proper location in the surfaces of each tubes.

The stop now is formed by a separate stop ring and if, so desired, a wiper ring can be present at the open ends of the cylindrical part of the base member and the sleeves with the exception of the innermost sleeve. The stop ring can be a resilient split annular ring as well as each lifting ring whilst the bearing rings can be composed of a pair of semi-circular segments.

The invention will now be further elucidated with reference to the accompanying drawings of a preferred embodiment.

Fig. 1 is a foreshortened plan view of a telescopic hydraulic cylinder embodying the features of this invention, the same being shown in retracted position, the lower half of the cylinder being in section to disclose details of construction.

Fig. 2 is an end view of the cylinder as seen from the right in Fig. 1.

The telescopic hydraulic cylinder of this invention includes a hollow base member 10 which is secured to any desired suitable mount as by means of trunnions 12 illustrated. Means for injecting hydraulic fluid into the interior of the base is provided in any conventional way, as by a threaded fluid inlet bore 14 extending through one of the trunnions.

The base member also includes an end closure, or blind head 16 at one end, provided with an annular fluid pressure seal 18. It is held in place removably by a segmented ring 20 seated in an annular groove in the base member and secured to the end closure by bolts 22. The ring may include any number of segments desired.

The opposite end of the base member is machined with plurality of internal ring-receiving grooves. In the embodiment illustrated, there are four such grooves configured, respectively, to removably receive a wiper ring 24, bearing ring 26, seal ring 28 and stop ring 30. The wiping ring is arranged outermost to prevent the entrance of foreign material that might be clinging to the outside surface of the adjacent telescoping stage during its retraction into the base member. The bearing ring is positioned adjacent the wiper ring and is of suitable material for providing a running, guiding fit with the outside surface of the adjacent telescoping stage. The seal ring is of a material to prevent hydraulic fluid leakage between the base member and adjacent telescoping stage during operation of the cylinder. The stop ring is provided inwardly of the seal ring to limit the outward extension of the adjacent telescoping stage, as explained more fully hereinafter.

The telescopic hydraulic cylinder also includes at least one and most often a plurality of telescoping cylinder stages, each configured to be successively smaller in diameter so as to be receivable within the next larger stage. Beginning with the largest stage illustrated, i.e. the cylinder 32 adjacent the base member 10, it is formed of a tubing having an outside diameter substantially equal to the inside diameter of the rings 24, 26 and 28 on the base member. As shown, the cylinder 32 incorporates on its inner surface, adjacent the end opposite the blind head 16 of the base member, four machined grooves for receiving a set of removable rings 24, 26, 28 and 30 similar to those incorporated on the inner surface of the base member 10. In addition, the cylinder 32 includes near its end adjacent the blind head of the base member a groove on its outside surface for receiving a guide bearing ring 34. This ring is arranged for sliding contact with the inside surface of the base member 10.

There is also provided on the inside surface of the cylinder 32, adjacent the blind head 16, a groove arranged to receive a lifting ring 36.

Each of the remaining successively smaller telescoping cylinder stages 38 and 40 illustrated includes the same arrangement of grooves and rings just described.

The innermost tubing 42 constitutes a piston, and it incorporates only a groove at its end adjacent the blind head 16. The groove removably receives a guide bearing ring 34 arranged for abutment with the lifting ring 36 of the adjacent telescoping cylinder stage 40. As illustrated, the piston 42 mounts a connector 44 at its outer end arranged for coupling to a load to be moved, such as the mechanism of a dump truck.

As previously mentioned, the tubings preferably are of a special hydraulic steel tubing drawn over a mandrel to a special tolerances, finishes and eccentricities. With the ring components illustrated and described, this tubing requires no finishing operations on the inside diameter. The only machining required after facing and chamfering the ends is to machine the internal grooves on one end of the base and telescoping cylinder stages for the wiper, bearing, seal and stop rings 24, 26, 28 and 30, respectively; one internal and one external groove on the opposite end of the telescoping cylinder stages 32, 38 and 40 for a guide ring 34 and lifting ring 36; one internal groove on the base member 10 for the locking ring 20; and one external groove on the piston 42 for the guide ring 36. The only other operation is external grinding done on a centerless grinding machine directly without preliminary machining.

Each of the guide rings 34 is a multi-purpose ring preferably made of high strength cast iron and split in two halves. This ring fits in the groove machined on the outside diameter of the telescoping cylinder stages and piston and provides three main functions. First, it functions as a guide sliding directly on the inside diameter of the adjacent outer tubing. Second, it functions as an abutment which, on contact with the stop ring 30 of the adjacent outer tubing, limits the stroke of the stage and takes the full force of the stage as exerted by the hydraulic pressure. Third, it functions as the contact point of the lifting ring 36 of the adjacent outer tubing which takes the full lifting force in the outer direction at the beginning of the stroke.

The guide ring bears against the accurately ground outside surface of the supporting tubing, rather than against the machine bottom of its mounting groove. This assists the ring in providing maximum strength of all components in both directions and good guiding on the mating stage.

Each stop ring 30 is a one piece split ring that acts as the other mating stop point for the associated guide ring 34 at the outer end of the stroke. It preferably is made of nodular iron and is snapped in place in the appropriate groove during assembly.

The bearing rings 26 preferably are of reinforced plastic. They are split and are designed to snap into place in the machined grooves in the tubings. One end of each ring acts as support for the seal ring 28 and the outer end for supporting the wiper ring 30. This arrangement eliminates the need for special devices to hold these components in place.

The lifting rings 36 are spring steel split rings of rather standard design. There are arranged removably in the grooves on the inside surface of the telescoping cylinder stages for abutting contact with the guide bearing rings 34 in the grooves on the outside surface of the adjacent smaller stage.

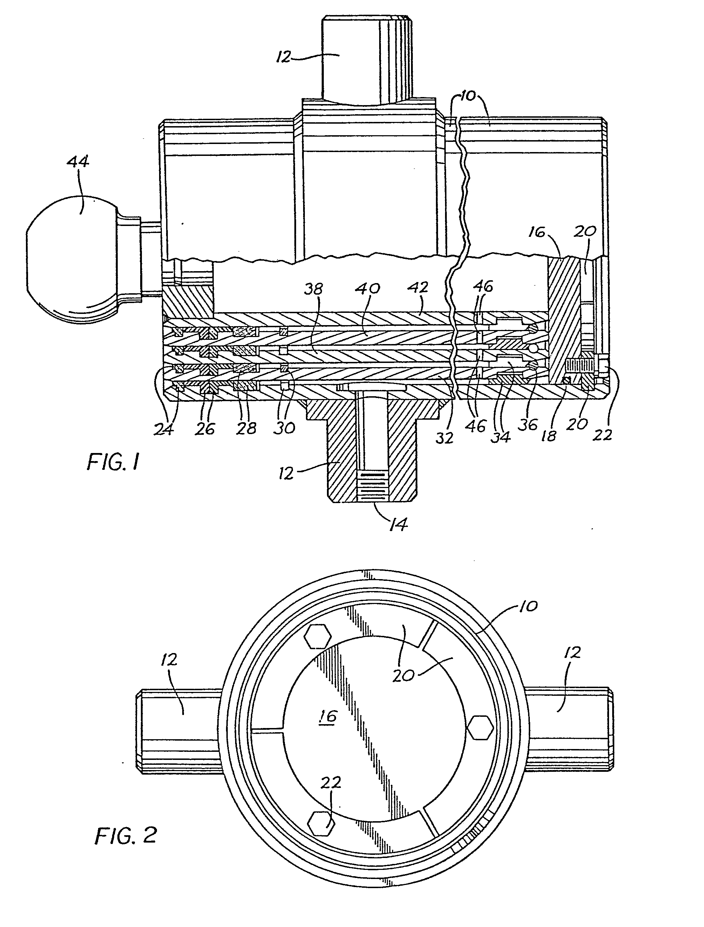

Fig. 1 shows fluid passage bores 46 extending through the tubing walls of the telescoping cylinder stages and piston adjacent the guide rings 34. These bores permit free passage of hydraulic fluid under pressure into the interiors of these components. Hydraulic fluid also is allowed to pass around the guide rings 34 and lifting rings 36.

Assembly of the telescopic hydraulic cylinder just described is as follows: First, all stop rings, seals, bearings, and wipers are installed in place. Next, the largest cylinder stage 32 is slipped into the base member 10 before the blind head 16 is installed. The next stage 38 then is slipped into the outer stage 32, stage 40 into stage 38, and finally the piston 42 into stage 40. As each stage reaches the guide groove for the guide ring 34 the two halves of the guide ring are put into place and the stage slid into place. Next, the lifting rings 36 are snapped into place and the blind head 16 is installed. Disassembly follows the reverse sequence.

The operation of the telescopic cylinder from the closed position of Fig. 1 is as follows: Hydraulic fluid under pressure in delivered from a source (not shown) to the oil inlet 14 and the internal portions of the cylinder stages and piston are filled with oil under pressure. The various stages which are free to move start to move out of the base member against the opposition of the load applied to the connector 44. The largest stage 32 with the greatest area moves outward first. As it moves, each successive lifting ring 36 contacts the confronting end of the guide ring 34 of the next smaller stage until all of the stages and piston 42 move together to lift the load.

When the abutting edge of the guide ring 34 of the first stage 32 comes in contact with the corresponding stop ring 30 of the base member 10, the first stage comes to a halt. The remaining stages continue to move outward, each stopping when the corresponding guide ring abuts the stop ring carried by the next larger stage, until the piston 42 is fully extended or the oil pressure is shut off. The telescopic cylinder is retracted when the oil inlet is opened to the reservoir of the supply and a load is applied to the piston end. During retraction of the cylinder stages any foreign matter such as dirt or debris clinging to the tubings is prevented from entering the cylinders by the wiping action of the wiper rings 24.

From the foregoing it will be appreciated that this invention provides a telescopic hydraulic cylinder characterized by the absence of welding, threading and excessive machining. This simplified construction is reflected in lower cost of manufacture and maintenance, ease of service and more consistent performance.

It will be understood that this telescopic cylinder construction may utilize any form of fluid pressure, such as pneumatic or the hydrualic pressure exemplified hereinbefore.

It will be further apparent to those skilled in the art that various changes may be made in the size, shape, type, number and arrangement of parts described hereinbefore. For example, the number of internal grooves in the base member and cylinder stages may be greater than four, to accommodate double sets of bearing rings 26 and double stop rings 30 separated by a spacer for very high pressure cylinders. Similarly, additional external grooves may be provided on the cylinders to accommodate double guide bearing rings 34, separated by a spacer, for very high pressure cylinders.

Having thus described my invention and the manner in which it may be used, I claim:

## Claims

1. Telescopic fluid pressure cylinder comprising an open ended hollow cylindrical base member (10) with closed end wall (16) at one end and provided with means (12) for supporting the cylinder as well as with a fluid pressure passageway (14) with means for connecting it to a fluid pressure source and further comprising a plurality of concentrically arranged cylindrical sleeves (32, 38, 40, 42), each guided and sealed inside the other with the outermost (32) guided and sealed inside the cylindrical base member (10) and the innermost sleeve (42) being closed at the end opposite the closed base (16) of the base member (10) and provided with means (44) for connecting it to a device to be moved, said base member (10) as well as all sleeves (32, 38, 40) between base member (10) and innermost sleeve (42) having near their open ends sealing rings (28), bearing rings (26) and a stop (30), whilst all sleeves (32, 38, 40, 42) at their opposite ends have an outwardly open groove with a bearing ring (34) in engagement with the inner cylindrical surface of base member (10) and the inner sleeves (32, 38, 40) respectively, characterized in that at least the sleeves (32, 38, 40, 42) are thin wall cylindrical tubes having near their open ends machined grooves in their interior surfaces for the removable mounting of the sealing ring (28), bearing ring (26) and a stop ring (30) whilst near their opposite ends the sleeves have machined grooves in the outer surfaces for the removable mounting of the bearing rings (34), the sleeves 32, 38, 40) between base member (10) and innermost sleeve (42) also each have in their inner surfaces a machined groove for a lifting ring (36) located adjacent to the respective inner bearing ring (34) between said bearing ring (34) and the closed end wall (16) of the base member (10) and arranged for abutment with said respective bearing ring (34).

2. Telescopic fluid pressure cylinder as claimed in claim 1, characterized in that the base member (10) is also a cylindrical thin wall tube.

3. Telescopic fluid pressure cylinder as claimed in claim 1 or 2, characterized in that each stop ring (30) is a resilient split annular ring, each lifting ring (36) is a resilient split annular ring and each guide bearing ring (34) comprises a pair of semi-circular segments.

4. Telescopic fluid pressure cylinder as claimed in claim 1, 2 or 3, characterized in that the open ends of base member (10) and all sleeves (32, 38, 40) except the innermost sleeve (42) have a machined inner groove for the removable mounting of a wiper ring (24).

## Revendications

1. Vérin télescopique à fluide sous pression comprenant une pièce de base (10) cylindrique creuse ouverte à une extrémité et munie d'une paroi (16) d'extrémité fermée à une autre extrémité et présentant des moyens (12) pour supporter le vérin ainsi que, pour le fluide sous pression, un orifice (14) muni de moyens pour le relier à une source de fluide sous pression, et comportant en outre un certain nombre de fourreaux cylindriques (32, 38, 40, 42) disposés concentriquement, dont chacun est guidé et étanche à l'intérieur de l'autre, le fourreau le plus extérieur (32) étant guidé et étanche à l'intérieur de la pièce de base cylindrique (10), tandis que le fourreau le plus intérieur (42) est fermé à l'extrémité opposée à la base fermée (16) de la pièce de base (10) et présente des moyens (44) pour le relier à un dispositif à déplacer, la pièce de base (10) ainsi que tous les fourreaux (32, 38, 40) situés entre la pièce de base (10) et le fourreau le plus intérieur (42) présentant près de leur extrémité ouverte des bagues d'étanchéité (28), des bagues de portée (26) et une butée (30), tandis que tous les fourreaux (32, 38, 40, 42) présentent à leur extrémité opposée une rainure ouverte vers l'extérieur avec une bague de portée (34) en contact avec la surface cylindrique intérieure de la pièce de base (10) et des fourreaux intérieurs (32, 38, 40, 42) respectivement, caractérisé en ce qu'au moins les fourreaux (32, 38, 40, 42) sont des tubes cylindriques à paroi mince présentant près de leur extrémité ouverte des rainures usinées dans leurs surfaces intérieures pour y monter amoviblement la bague d'étanchéité (28), la bague de portée (26) et une bague d'arrêt (30), tandis que, près de leur extrémité opposée, les fourreaux présentent des rainures usinées dans les surfaces extérieures pour y monter amoviblement les bagues de portée (34), et en ce que les fourreaux (32, 38, 40) situés entre la pièce de base (10) et le fourreau le plus intérieur (42) présentent également chacun, dans leurs surfaces intérieures, une rainure usinée pour une bague de levage (36) située près de la bague intérieure de portée respective (34), entre ladite bague de portée (34) et la paroi d'extrémité fermée (16) de la pièce de base (10), et disposée pour venir en butée avec ladite bague de portée respective (34).

2. Vérin télescopique à fluide sous pression selon la revendication 1, caractérisé en ce que la pièce de base (10) est également un tube cylindrique à paroi mince.

3. Vérin télescopique à fluide sous pression selon l'une des revendications 1 ou 2, caractérisé en ce que chaque bague d'arrêt (30) est une bague annulaire fendue élastique, en ce que chaque bague de levage (36) est une bague annulaire fendue élastique et en ce que chaque bague de portée de guidage (34) comprend une paire de segments semi-circulaires.

4. Vérin télescopique à fluide sous pression selon l'une des revendications 1 à 3, caractérisé en ce que les extrémités ouvertes de la pièce de base (10) et de tous les fourreaux (32, 38, 40) à l'exception du fourreau le plus intérieur (42) présentent une rainure intérieure usinée pour y monter amoviblement une bague racleuse (24).

**Patentansprüche**

1. Tekeskopischer Fluiddruckzylinder mit einem offenendigen, hohlen, zylindrischen Grundkörper (10) mit einer an einem Ende angeordneten geschlossenen Endwand und Mitteln (12) sowohl zur Lagerung des Zylinders als auch mit einem Fluiddruckkanal (14) mit Mitteln, um ihn mit einer Fluiddruckquelle zu verbinden, wobei weiter mehrere konzentrisch angeordnete, zylindrische Hülsen (32, 38, 40, 42) vorgesehen sind, von denen jeweils die eine innerhalb der anderen geführt und abgedichtet ist, und wobei die äußerste (32) innerhalb des zylindrischen Grundkörpers (10) geführt und abgedichtet ist, und die innerste Hülse (42) an dem der geschlossenen Grundplatte (16) des Grundkörpers (10) gegenüberliegenden Ende verschlossen und mit Mitteln (44) zum Verbinden mit einer zu bewegenden Einrichtung versehen ist, und weiter der Grundkörper (10) als auch alle Hülsen (32, 38, 40) zwischen dem Grundkörper (10) und der innersten Hülse (42) in der Nähe inhrer offenen Enden Dichtringe (28), Lagerringe (26) und einen Anschlag (30) aufweisen, während alle Hülsen (32, 38, 40, 42) an ihren gegenüberliegenden Enden eine nach außen offene Nut mit einem mit der inneren Zylinderfläche des Grundkörpers (10) und der inneren Hülsen (32, 38, 40) in Eingriff stehenden Lagerring (34) aufweisen, dadurch gekennzeichnet, daß mindestens die Hülsen (32, 38, 40, 42) dünnwandinge zylindrische Rohre sind, die in der Nähe ihrer offenen Enden in ihren Innenfläche eingearbeitete Nuten zum lösbaren Befestigen des Dichtrings (28), des Lagerrings (26) und eines Anschlagrings (30) aufweisen, während die Hülsen in der Nähe ihrer gegenüberliegenden Enden in ihre Außenfläche eingearbeitete Nuten zum lösbaren Befestigen der Lagerringe (34) aufweisen, und die Hülsen (32, 38, 40) zwischen dem Grundkörper (10) und der innersten Hülse (42) jeweils in ihren Flächen ebenfalls eine eingearbeitete Nut für einen Hubring (36), der zu dem entsprechenden inneren Lagerring (34) benachbart zwischen dem Lagerring (34) und der geschlossenen Endwand (16) des Grundkörpers (10) liegt und zum Anschlag gegen den entsprechenden Lagerring (34) angeordnet ist, aufweisen.

2. Teleskopischer Fluiddruckzylinder nach Anspruch 1, dadurch gekennzeichnet, daß der Grundkörper (10) ebenfalls als zylindrisches dünnwandiges Rohr ausgebildet ist.

3. Teleskopischer Fluiddruckzylinder nach Anspruch 1 oder 2, dadurch gekennzeichnet, daß jeder Anschlagring (30) ein geschlitzter Federring, jeder Hubring (36) ein geschlitzter Federring ist, und jeder Führungsring (34) ein Paar halbkreisförmiger Segmente umfaßt.

4. Teleskopischer Fluiddurckzylinder nach Anspruch 1, 2 oder 3, dadurch gekennzeichnet, daß die offenen Enden des Grundkörpers (10) und alle Hülsen (32, 38, 40) mit Ausnahme der innersten Hülse (42) eine eingearbeitete Innennut zum lösbaren Befestigen eines Abstreifrings (24) aufweisen.

FIG. 1

FIG. 2